# EUROPEAN PATENT SPECIFICATION

(11) **EP 3 911 268 B1**
(45) Date of publication and mention of the grant of the patent: **20.12.2023**
(21) Application number: 20700805.3
(22) Date of filing: 14.01.2020
(51) Int. Cl.: A61C 17/22, A46B 15/00, A61C 17/34

(54) **ORAL CARE APPLIANCE WITH USER INTERACTION**
MUNDPFLEGEGERÄT MIT BENUTZERINTERAKTION
APPAREIL DE SOINS BUCCODENTAIRES INTERACTIF AVEC L'UTILISATEUR

(30) Priority: 14.01.2019 US 201962791949 P
(43) Date of publication of application: 24.11.2021
(73) Proprietor: Koninklijke Philips N.V., 5656 AG Eindhoven (NL)
(72) Inventor: FARRELL, Nathan, 5656 AE Eindhoven (NL)
(74) Representative: Philips Intellectual Property & Standards
(86) International application number: PCT/EP2020/050784
(87) International publication number: WO 2020/148266

(56) References cited:
- WO-A1-2016/185154
- US-A- 5 493 747
- US-A1- 2018 132 603

## Description

### Field of the Disclosure

The present invention is directed generally to oral care appliances.

### Background

US5493747A discloses an electric toothbrush with a control circuit capable of stopping the brushing operation when the brush is pressed against a user's teeth with an excessive force.

WO2016185154A1 discloses a dental cleaning appliance that includes a handle and a fluid delivery system for delivering a burst of working fluid to the teeth of a user. Part of the fluid delivery system, including a nozzle, a fluid conduit and a support, is moveable relative to the handle as the appliance is moved along the teeth of the user. A sensor provides an output which varies with movement of that part of the fluid delivery system relative to the handle. A control circuit actuates the delivery of working fluid to the teeth of the user depending on the output from the sensor.

Oral care appliances typically contain at least one button, knob, or switch arranged on the device that allows a consumer using the device to switch the device on/off or between different modes of operation. These controls typically are arranged outside of, and protrude through, the housing of the device such that they are able to connect with the various internal electronic components that allow the device to function when used.

The implementation of these controls from a manufacturing perspective is expensive as their presence typically requires insert molding and multishot injection molding processes to create a housing capable of utilizing these controls. Additionally, robotic mechanisms are often required to insert and remove the various pieces between manufacturing stages, further lending to increased cost. Moreover, button controls usually require a switch of some kind which can be an expensive component.

In addition to the cost prohibitive nature of these multistage manufacturing processes, ergonomic placement of these controls limits the places on the housing where the controls can be located, thus limiting the potential configurations for the placement and orientation of the internal electronics. Moreover, the placement of the controls through an aperture in the housing exposes the internal electronics to liquid ingress during operation of the device, potentially compromising the internal electronics.

### Summary of the Disclosure

There is a continued need for an oral care appliance that responds to user interaction without the need for external controls. The invention is defined by claim 1. The dependent claims define advantageous embodiments.

The present disclosure is directed to an inventive oral care appliance having a housing, the housing including a tip and a body. The body is pivotably, rotationally, or translationally secured to the tip and further includes a sensor. The body also includes a control unit arranged to receive at least one input signal from the sensor and switch the oral care appliance from a first mode to a second mode in response to the at least one input signal from the sensor. The at least one input signal corresponding the tip being pivoted, rotated, or translated from a first position to a second position The control unit further comprises an accelerometer or a gyroscope arranged to sense a first orientation of the oral care appliance and a second orientation of the oral care appliance. The first orientation corresponds to the body of the oral care appliance being substantially parallel with the imaginary axis and the second orientation corresponds to the body of the oral care appliance being substantially orthogonal to the imaginary axis. The control unit is configured to prevent the switch from the first mode to the second mode when the oral care appliance is in the second orientation. The control unit is configured to turn the oral care appliance on or off in response to the at least one input signal when the oral care appliance is in the second orientation.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is an oral care appliance according to the prior art.
FIG. 2 is an example embodiment of an oral care appliance according to the present disclosure that is pivotably actuatable.
FIG. 3 is an example embodiment of an oral care appliance according to the present disclosure that is translationally actuatable.
FIG. 4 is an example embodiment of an oral care appliance according to the present disclosure that is rotationally actuatable.
FIG. 5A illustrates an oral care appliance according to the present disclosure in a first orientation.
FIG. 5B illustrates an oral care appliance according to the present disclosure in a second orientation.
FIG. 6 illustrates a control unit used in an oral care appliance according to the present disclosure.

### Detailed Description of Embodiments

The present disclosure describes various embodiments of an oral care appliance having a housing, the housing including a tip and a body. The body is pivotably, rotationally, or translationally secured to the tip and further includes a sensor. The body also includes a control unit arranged to receive at least one input signal from the sensor and switch the oral care appliance from a first mode to a second mode in response to the at least one input signal from the sensor. The at least one input signal corresponding the tip being pivoted, rotated, or translated from a first position to a second position.

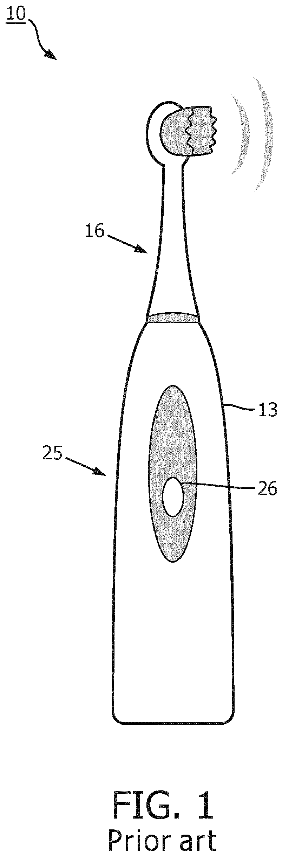

Referring to the figures, FIG. 1 illustrates oral care appliance 10 according to the prior art. Oral care appliance 10 includes housing 13. Housing 13 includes tip 16 and body 25. Body 25 includes controls 26 which are positioned on the outside of the body of the housing and can be actuated via a finger of a user.

This configuration requires expensive multistage manufacturing processes and may create issues such as, but not limited to, ingress of liquid from outside the housing to inside the housing, potentially compromising the internal electronic components; the need for robotic assistance during assembly; a multistage injection molding process; and, limited internal electronic configurations do to the ergonomic placement of controls 26.

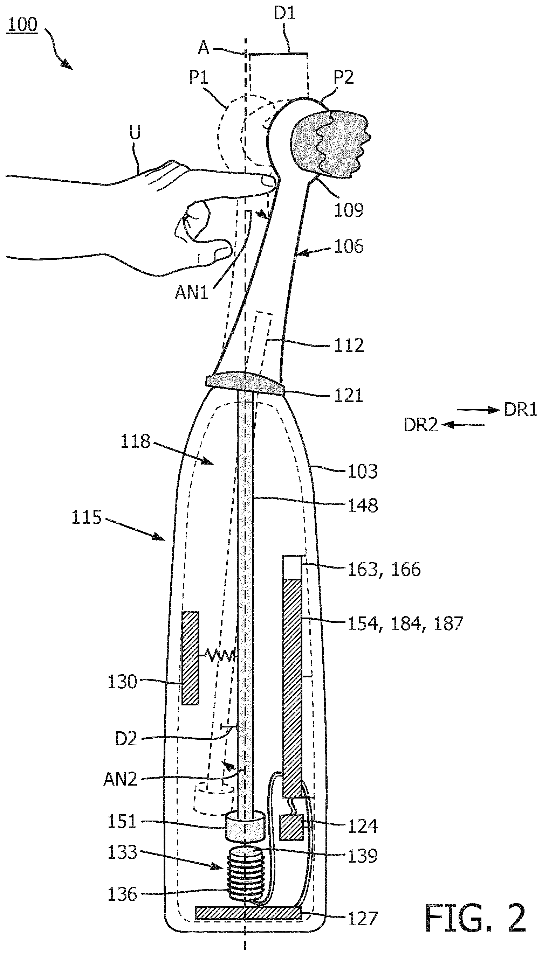

FIG. 2 illustrates oral care appliance 100 in accordance with the present application. Oral care appliance 100 has a housing 103. Housing 103 includes tip 106. Tip 106 includes workpiece 109 and first partial through-bore 112. As illustrated throughout FIGS. 2-5B, oral care appliance 100 is preferably a power toothbrush with a workpiece 109 that is a brush-head for an electronic power toothbrush. First partial through-bore 112 extends within tip 106 and is arranged to receive drive shaft 148 discuss below.

The embodiments and implementations disclosed or otherwise envisioned herein can be utilized with any suitable oral healthcare device. Examples of suitable oral healthcare devices include a toothbrush, such as a Philips Sonicare^{®} toothbrush, a flossing device, an oral irrigator, a tongue cleaner, or other personal care device. However, the disclosure is not limited to these oral healthcare devices.

Oral care appliance 100 further includes body 115 having a cavity 118 disposed therein. Oral car appliance 100 further includes seal 121. Seal 121 can be arranged between tip 106 and body 115, or between drive shaft 148 and body 115, to prevent ingress of liquid within cavity 118 during use of the device. Seal 121 is elastically deformable such that in the event tip 106 is displaced, as disclosed below, seal 121 expands, shrinks, and/or adjusts so that no liquid can enter body 115. Body 115 has an inner circumferential surface disposed about cavity 118. Within cavity 118 of body 115, oral care appliance 100 further includes sensor 124, power source 127, spring assembly 130, stator assembly 133, drive shaft 148, magnet 151, and control unit 154. Sensor 124 is arranged within body 115 and fixedly secured to the inner circumferential surface of cavity 118. Sensor 124 is also arranged to sense a change in magnetic field 145 and send at least one signal 172, discussed below, to control unit 154. Preferably sensor 124 is a hall-effect sensor, but could be any other sensor capable of sensing a change in magnetic field 145 (not shown) or position of magnet 151. Drive shaft 148 is a substantially solid, potentially flexible body that extends from magnet 151 to and within partial through-bore 112.

Power source 127 is also arranged within cavity 118 and is electrically connected to control unit 154. Power source 127 can be any power source sufficient to provide control unit 154 and stator assembly 133 with sufficient power to engage drive shaft 148 of oral care appliance 100. Preferably, power source 127 is a rechargeable battery; however, it should be appreciated that power source 127 could be any power source sufficient to drive stator assembly 133 to engage drive shaft 148, for example, non-rechargeable batteries, or a wired AC or DC power supply. Spring assembly 130 includes at least one spring and is fixedly secured to the inner circumferential surface of cavity 118. Spring assembly 130 is further arranged to create a rotational and/or translational spring biasing force on drive shaft 148.

Stator assembly 133 further includes coil 136 and stator member 139. Coil 136 is electrically connected to control unit 154 and disposed about stator member 139. Coil 136 is arranged to receive an electrical signal 142 (not shown) from control unit 154. When electrical signal 142 flows through coil 136, coil 136 and stator member 139 create a magnetic field 145 (not shown). Stator member 139 is preferably a substantially metallic member able to create magnetic field 145 (not shown).

Magnet 151 is fixedly and non-rotationally coupled to drive shaft 148. Magnetic field 145, generated by stator assembly 133, interacts, influences, and rotationally drives magnet 151 and drive shaft 148. Spring assembly 130 contains at least one spring coupled between the inner circumferential surface of cavity 118 and drive shaft 148. In an example embodiment, the at least one spring resists and absorbs rotational energy produced by the rotating drive shaft 148 and releases the stored rotational energy in a rotational direction opposite the rotational direction induced on drive shaft 148 by the stator assembly 133 and magnet 151. This oscillation in rotational direction creates a corresponding oscillation in the drive mechanisms within the workpiece 109, for example, oscillating the bristle tufts of the brush-head of a power toothbrush. Drive shaft 148 and magnet 151 are arranged such that they are movable within cavity 118.

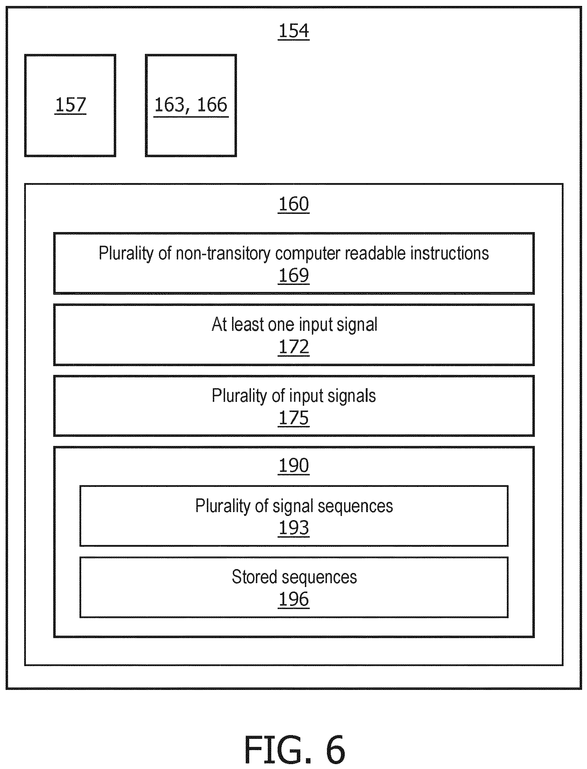

Control unit 154 includes processor 157 (shown in FIG. 6), memory 160 (shown in FIG. 6), and an accelerometer 163 or gyroscope 166. Memory 160 is arranged to store a plurality of non-transitory computer readable instructions 169, at least one input signal 172 from sensor 124, a plurality of input signals 175, a database 190 of plurality of signal sequences 193, and a stored sequence 196 (all shown in FIG. 6). Processor 157 is arranged to execute plurality of non-transitory computer readable instructions 169 and is configured to control unit 154 between a first mode 184 and a second mode 187. First mode 184 and second mode 187 can correspond to predefined settings of the oral care device, for example, first mode 184 may correspond to a first brushing intensity setting and second mode 187 may correspond to a second brushing intensity setting, where the second brushing intensity setting is greater than the first. Additionally, first mode 184 and second mode 187 can correspond to other predefined settings of the oral care device, for example, a daily cleaning mode, a massage mode, a sensitive cleaning mode, a tongue cleaning mode or any other predefined mode known in the art of power toothbrushes.

At least one input signal 172 (shown in FIG. 6) is generated when sensor 124 perceives a change in magnetic field 145 (not shown). Additionally, memory 160 is arranged to store a plurality of input signals 175 which correspond to a series of at least one input signals 172, which can take the form of a plurality of signals over a predefined time period, e.g., in a cadence. The cadence can be in the form of a "double tap" or "triple tap" of tip 106. The control unit is arranged to store the plurality of input signals 175 in memory 160 as stored signal 196. Processor 157 is also arranged to compare stored signal 196 to plurality of sequences 193 in database 190 to determine if there is a match between stored signal 196 and at least one sequence of plurality of sequences 193. Plurality of sequences 193 correspond to different modes of operation, for example first mode 184 or second mode 187, or may correspond to turning oral care appliance 100 from off to on, or on to off.

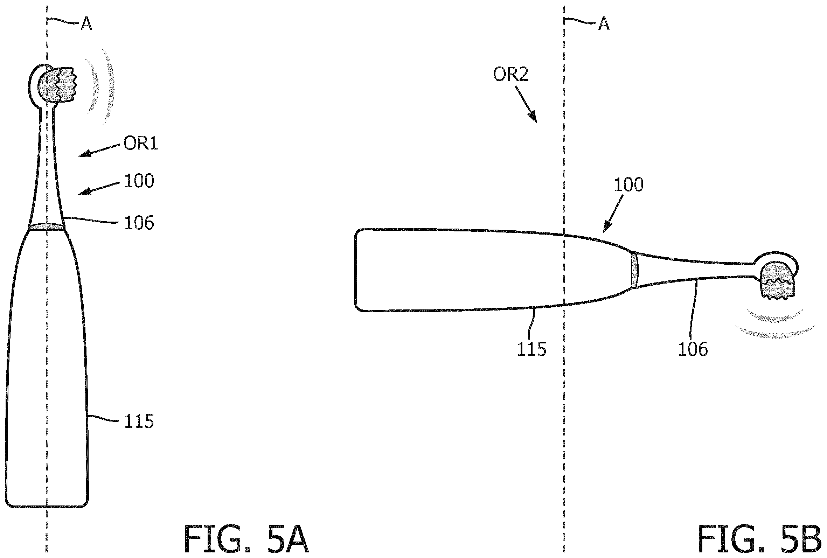

As mentioned above, control unit 154 includes accelerometer 163 and/or gyroscope 166. Accelerometer 163 and/or gyroscope 166 are arranged to sense/perceive/detect the orientation of oral care appliance 100. Specifically, accelerometer 163 and/or gyroscope 166 are arranged to sense/perceive/detect at least a first orientation OR1 and a second orientation OR2 (shown in FIGS. 5A and 5B, respectively). Alternatively, any proximity sensor known in the art could be placed within or on housing 103, or within or on workpiece 109, and used to sense a proximity to user U. For example, a capacitive proximity sensor or a light/ultrasound sensor can be used to detect a distance or proximity between user U's head, mouth, or body to oral care appliance 100. This proximity sensor can be used as an alternative mechanism for determining whether oral care appliance 100 is in first orientation OR1 or second orientation OR2. As a non-limiting example, oral care appliance can, by default, be in first orientation OR1 substantially parallel with imaginary axis A. When user U places oral care appliance in user U's mouth, the proximity sensor sends a signal to control unit 154 indicating that oral care appliance is in second orientation OR2. It should further be appreciated that instead of, or in addition to, determining whether oral care appliance 100 is in first orientation OR1 or second orientation OR2, the signals from the proximity sensor can be used to turn oral care appliance on/off or switch operational states, e.g., from a first intensity to a second intensity.

During operation of the example embodiment illustrated in FIG. 2, oral care appliance 100 is pivotably actuatable by user U, i.e., tip 106 of housing 103 is pivotable with respect to body 115 from a first position P1 to a second position P2. User U displaces tip 106 in a first direction DR1 a first distance D1 such that first angle AN1 is created between tip 106 and imaginary axis A. Distance D1 can be relatively small such that first angle AN1 is relatively small, e.g., between 1-3 degrees with respect to axis A. A small first angle AN1 ensures that drive shaft 148 does not bind within partial through-bore 112 and is still free to rotate when the oral care appliance is on. The pivotable actuation of tip 106 in direction DR1 creates a corresponding actuation of magnet 151 in direction DR2, opposite direction DR1, a second distance D2, where D1 and D2 are substantially equal. The displacement of magnet 151 in second direction DR2 over the second distance D2 creates a second angle AN2 substantially equal to AN1 with respect to axis A. It should be appreciated that D1 does not need to be equal to D2, e.g., D2 could be larger or smaller than D1, and AN1 does not need to be equal to AN2, e.g., AN2 could be larger or smaller than AN1.

When sensor 124 perceives a change in magnetic field 145 (not shown) due to the displacement of magnet 151, sensor 124 sends at least one signal 172 (shown in FIG. 6) to control unit 154 which is stored in memory 160. Control unit 154 is arranged to execute plurality of non-transitory computer readable instructions 169 (shown in FIG. 6) to switch oral care appliance 100 between first mode 184 and second mode 187. It should be appreciated that user U may displace tip 106 in a cadence, e.g., "double-tapping" or "triple-tapping" tip 106, or as a sustained signal, e.g., holding tip 106 is position P2, creating a plurality of input signals 175 at sensor 124. Plurality of input signals 175 are stored in memory 160 (shown in FIG. 6) as stored sequence 196, which can be compared to the plurality of signal sequences 193 stored in memory 160. Processor 157 is arranged to compare stored sequence 196 (shown in FIG. 6) with plurality of signal sequences 193 and if there is a match, i.e., the signals match to within a predefined error threshold, control unit 154 is arranged to execute plurality of non-transitory computer readable instructions 169 to switch oral care appliance between first mode 184 and second mode 187. In this way, sensor 124 acts as an indirect pressure sensor for any significant pressure exerted on tip 106 in direction DR1, DR2, or any other direction substantially orthogonal to imaginary axis A.

It should be appreciated that control unit 154 is configured to switch between first mode 184 and second mode 187 in response to at least one input signal 172 and/or plurality of input signals 175 when accelerometer 163 and/or gyroscope 166 perceive that oral care appliance 100 is in a first orientation OR1 (shown in FIG. 5A), e.g., when oral care appliance 100 is substantially parallel with imaginary axis A, which is arranged orthogonal to the ground or floor user U is standing or sitting on when using oral care appliance 100. Furthermore, it should be appreciated that control unit 154 can be configured to prevent a switch between first mode 184 and second mode 187 when accelerometer 163 and/or gyroscope 166 perceive that oral care appliance 100 is in a second orientation OR2 (shown in FIG. 5B), e.g., when oral care appliance 100 is substantially orthogonal to imaginary axis A. Moreover, when accelerometer 163 and/or gyroscope 166 perceive(s) that oral care appliance 100 is in second orientation OR2, and control unit 154 receives at least one input signal 172 and/or plurality of input signals 175, control unit 154 can further be configured to switch oral care appliance 100 from an off-state to an on-state or an on-state to an off-state or switch oral care appliance 100 from a first intensity setting to a second intensity setting.

As one example, when user U is engaging with oral care appliance 100 to clean his/her teeth, the contact between user U's teeth or gums and tip 106 may be significant enough to send input signal 172 to control unit 154. If oral care appliance 100 is in second orientation OR2 (shown in FIG. 5B), Control unit 154 can ignore at least one input signal until the displacement of the magnet, and therefore the disturbance of magnetic field 145 (not shown), is significant enough that it reaches a predefined threshold, control unit 154 may automatically switch oral care appliance from a first intensity setting to a second intensity setting where the second intensity setting is greater than the first, such that the increase in power to stator assembly 133 is large enough to compensate for the increase torsional resistance from the force of the work-piece 109 against user U's teeth or gums.

Optionally, when in the second orientation OR2 (shown in FIG. 5B), control unit 154 can be arranged to completely ignore at least one input signal 172 and/or plurality of input signals 175, and oral care appliance 100 may be turned on or off via a pressure sensor (not shown) located in work-piece 109 such that when in second orientation OR2 and the user U presses the work-piece 109 against their teeth or gums, the pressure sensor sends a signal to the control unit to turn on the device, and when the user releases this pressure against their teeth or gums, the pressure sensor sends a signal to the control unit to turn off the device. Alternatively, sensor 124 may act as the pressure sensor when oral care appliance 100 is in second orientation OR2. For example, as the lateral pressure on workpiece 109 increases to a predefined threshold, sensor 124 senses a change in magnetic field 145 (not shown) and a signal is sent to control unit 154 to turn the device on/off/ or alert user U of the excess pressure.

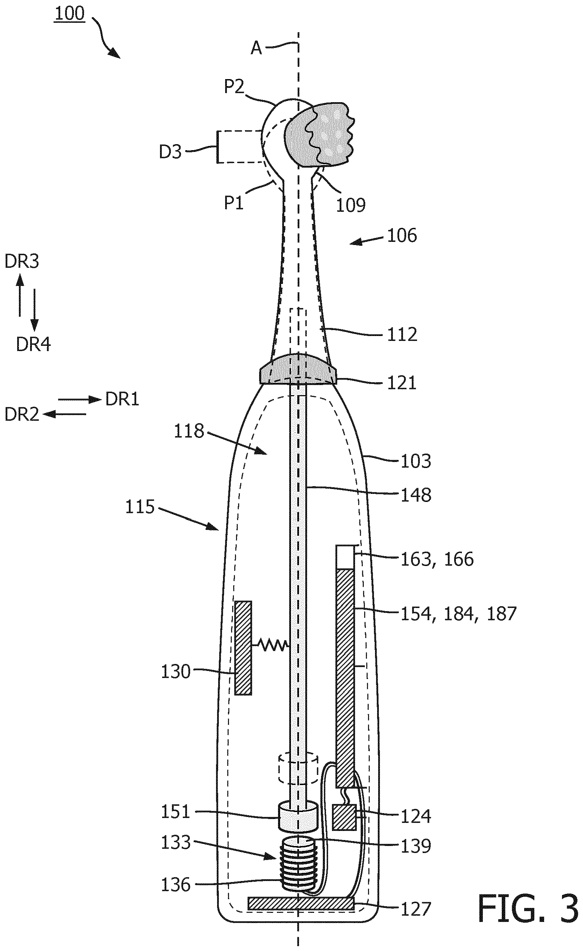

FIG. 3 illustrates an embodiment of oral care appliance 100 where tip 106 is translationally actuatable, i.e., at least one input signal 172 and/or plurality of input signals 175, correspond with translational movement of tip 106, drive shaft 148, and magnet 151 in a third direction DR3 substantially parallel with imaginary axis A and away from body 115 a third distance D3. When sensor 124 perceives a change in magnetic field 145 caused by the displacement of these components over a third distance D3, sensor 124 generates at least one input signal 172 and/or plurality of input signals 175. If the displacement is rhythmic, sustained (e.g., if the user U is holding the tip 106 in second position P2), or in a cadence, i.e., in a predefined sequence over a predefined time period, the at least one input signal 172 and/or plurality of input signals 175 will be interpreted by control unit 154 and compared with a predefined table of inputs to determine the appropriate response. Although FIG. 3, illustrates and describes this translational actuation made in third direction DR3, it should be appreciated that a similar translational actuation may be made in fourth direction DR4, opposite DR3, i.e., depressing tip 106 towards or within body 115.

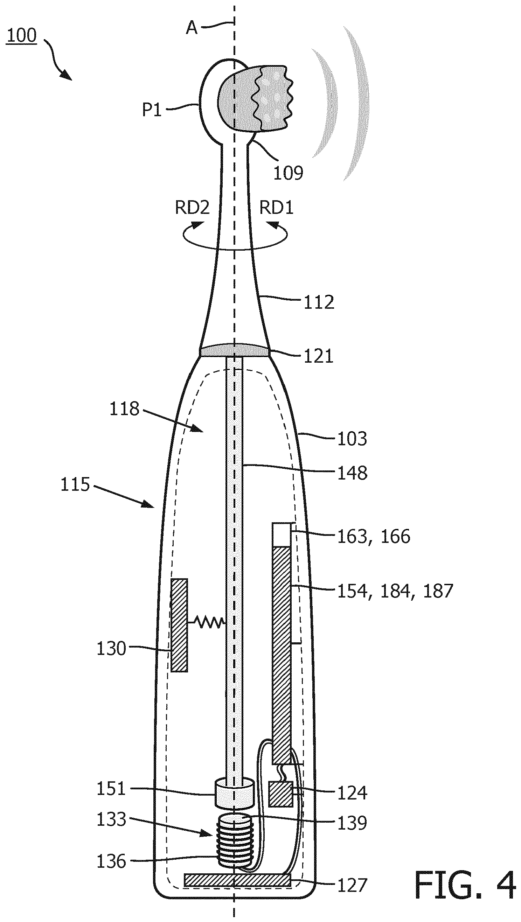

FIG 4. illustrates an embodiment of oral care appliance 100 where tip 106 is rotationally actuatable, i.e., at least one input signal 172 and/or plurality of input signals 175, correspond with rotational movement of tip 106, from first position P1 to second position P2 (not shown). User U may rotationally displace tip 106 in first rotational direction RD1 or second rotational direction RD2. Preferably, first position P1 and second position P2 (not shown) share a common axis of rotation substantially parallel and concentric with imaginary axis A. Additionally, the rotational displacement between first position P1 and second position P2 (not shown) can be small, e.g., 5-10 degrees of rotation about imaginary axis A in first rotational direction DR1 or second rotational direction RD2. It should be appreciated that the rotational displacement about axis A can be varied to any rotation larger than the smallest rotation sufficient to cause a change in magnetic field 145 that can be perceived by sensor 124. Similarly to the pivotable and translational actuations above, control unit 154 is configured to switch between first mode 184 and second mode 187 in response to at least one input signal 172 and/or plurality of input signals 175 when accelerometer 163 and/or gyroscope 166 perceive that oral care appliance 100 is in a first orientation OR1 (shown in FIG. 5A), e.g., when oral care appliance 100 is substantially parallel with imaginary axis A, which is arranged orthogonal to the ground or floor user U is standing or sitting on when using oral care appliance 100. Furthermore, it should be appreciated that control unit 154 is configured to prevent a switch between first mode 184 and second mode 187 when accelerometer 163 and/or gyroscope 166 perceive that oral care appliance 100 is in a second orientation OR2 (shown in FIG. 5B), e.g., when oral care appliance 100 is substantially orthogonal with imaginary axis A. Instead, when accelerometer 163 and/or gyroscope 166 perceive that oral care appliance 100 is in second orientation OR2, and control unit 154 receives at least one input signal 172 and/or plurality of input signals 175, control unit 154 is arranged to switch oral care appliance 100 from an off-state to an on-state or an on-state to an off-state.

FIG. 5A illustrates oral care appliance 100 in first orientation OR1 where body 115 is substantially parallel with imaginary axis A which is substantially orthogonal to the ground or floor that user U is standing or sitting on when using oral care appliance 100. FIG. 5B illustrates oral care appliance 100 in second orientation OR2 where body 115 is substantially orthogonal with imaginary axis A. FIG. 6 illustrates the various components, signals, and sequences contained within control unit 154 as discussed above.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "having," "containing," "holding," and the like are to be understood to be open-ended, i.e., to mean including but not limited to.

The foregoing embodiments are presented by way of example only and that, within the scope of the appended claims.

## Claims

1. An oral care appliance (100) comprising:
a housing (103) comprising:
a tip (106);
a body (115) pivotably or translationally secured to the tip and substantially parallel with an imaginary axis (A), the body having a sensor (124); and,
a control unit (154) arranged to receive at least one input signal (172) from the sensor located within the body, the control unit arranged to switch the oral care appliance from a first mode (184) to a second mode (187) in response to the at least one input signal from the sensor, the at least one input signal corresponding to the tip being pivoted or translated from a first position (P1) to a second position (P2);
**characterised in that**
the control unit further comprises an accelerometer (163) or a gyroscope (166) arranged to sense a first orientation (OR1) of the oral care appliance and a second orientation (OR2) of the oral care appliance, wherein the first orientation corresponds to the body of the oral care appliance being substantially parallel with the imaginary axis and the second orientation corresponds to the body of the oral care appliance being substantially orthogonal to the imaginary axis; and
wherein the control unit is configured to prevent the switch from the first mode to the second mode when the oral care appliance is in the second orientation, and wherein the control unit is configured to turn the oral care appliance on or off in response to the at least one input signal when the oral care appliance is in the second orientation.

2. The oral care appliance of claim 1, wherein the tip comprises:
a workpiece (109) operatively arranged to contact a user (U); and,
a first partial through-bore (112) disposed substantially parallel with the imaginary axis.

3. The oral care appliance of claim 2, wherein the sensor and control unit are arranged within a cavity (118) within the body, the cavity further comprising:
a power source (127);
a stator assembly (133) arranged to generate a magnetic field (145) in response to an electrical signal (142) from the power source;
a magnet (151) arranged within the magnetic field of the stator assembly;
a drive shaft (148) coupled to the magnet and positioned within the partial through-bore of the tip;
wherein, when the tip is pivoted, the displacement of the tip in a first direction (DR1) over a first distance (D1) creates a corresponding displacement of the magnet in a second direction (DR2), opposite the first direction, over a second distance (D2) generating a change in the magnetic field and wherein the sensor is arranged to perceive the change in the magnetic field and send the at least one input signal to the control unit; and wherein, when the tip is translated, a displacement of the tip in a third direction (DR3) over a third distance (D3) creates a corresponding displacement of the magnet in the third direction generating a change in the magnetic field where the sensor is arranged to perceive the change in the magnetic field and send the at least one input signal to the control unit.

4. The oral care appliance of claim 1, wherein the control unit comprises a processor (157) and a memory (160), the memory arranged to store a plurality of non-transitory computer readable instructions (169) and the at least one input signal from the sensor, the processor arranged to execute the plurality of non-transitory computer readable instructions to switch the stator assembly between the first mode and the second mode in response to the at least one input signal.

5. The oral care appliance of claim 4 wherein the control unit is arranged to receive a plurality of input signals (175), where the plurality of input signals correspond to a plurality of switches of the tip from the first position to the second position.

6. The oral care appliance of claim 5 wherein the memory of the control unit is further arranged to store a database (190) of a plurality of signal sequences (193), and the plurality of input signals, and the processor is arranged to compare a stored sequence (196) corresponding to the plurality of input signals with the plurality of signal sequences in the database.

## Patentansprüche

1. Mundpflegegerät (100), umfassend:
ein Gehäuse (103) mit:
einer Spitze (106);
einem Körper (115), der schwenkbar oder verschiebbar an der Spitze und im Wesentlichen parallel zu einer imaginären Achse (A) befestigt ist, wobei der Körper einen Sensor (124) aufweist; und,
einer Steuereinheit (154), die so angeordnet ist, dass sie mindestens ein Eingangssignal (172) von dem in dem Körper angeordneten Sensor empfängt, wobei die Steuereinheit so angeordnet ist, dass sie das Mundpflegegerät als Reaktion auf das mindestens eine Eingangssignal von dem Sensor von einem ersten Modus (184) in einen zweiten Modus (187) umschaltet, wobei das mindestens eine Eingangssignal dem Schwenken oder der Verschiebung der Spitze von einer ersten Position (P1) in eine zweite Position (P2) entspricht;
**dadurch gekennzeichnet, dass**
die Steuereinheit ferner einen Beschleunigungsmesser (163) oder ein Gyroskop (166) umfasst, die so angeordnet sind, dass sie eine erste Ausrichtung (OR1) des Mundpflegegeräts und eine zweite Ausrichtung (OR2) des Mundpflegegeräts erfassen, wobei die erste Ausrichtung dem Körper des Mundpflegegeräts entspricht, der im Wesentlichen parallel zu der imaginären Achse ist, und die zweite Ausrichtung dem Körper des Mundpflegegeräts entspricht, der im Wesentlichen orthogonal zu der imaginären Achse ist; und
wobei die Steuereinheit so konfiguriert ist, dass sie den Wechsel von dem ersten Modus in den zweiten Modus verhindert, wenn sich das Mundpflegegerät in der zweiten Ausrichtung befindet, und wobei die Steuereinheit so konfiguriert ist, dass sie das Mundpflegegerät in Reaktion auf das mindestens eine Eingangssignal ein- oder ausschaltet, wenn sich das Mundpflegegerät in der zweiten Ausrichtung befindet.

2. Mundpflegegerät nach Anspruch 1, wobei die Spitze umfasst:
ein Werkstück (109), das so angeordnet ist, dass es einen Benutzer (U) berührt; und
eine erste Teildurchgangsbohrung (112), die im Wesentlichen parallel zu der imaginären Achse angeordnet ist.

3. Mundpflegegerät nach Anspruch 2, bei dem der Sensor und die Steuereinheit in einem Hohlraum (118) innerhalb des Körpers angeordnet sind, wobei der Hohlraum ferner umfasst:
eine Stromquelle (127);
eine Statoranordnung (133), die so angeordnet ist, dass sie in Reaktion auf ein elektrisches Signal (142) von der Stromquelle ein Magnetfeld (145) erzeugt;
einen Magneten (151), der im Magnetfeld der Statoranordnung angeordnet ist;
eine Antriebswelle (148), die mit dem Magneten gekoppelt und in der Teildurchgangsbohrung der Spitze positioniert ist;
wobei, wenn die Spitze geschwenkt wird, die Verschiebung der Spitze in einer ersten Richtung (DR1) über einen ersten Abstand (D1) eine entsprechende Verschiebung des Magneten in einer zweiten Richtung (DR2), entgegengesetzt zu der ersten Richtung, über einen zweiten Abstand (D2) erzeugt, die eine Änderung des Magnetfeldes erzeugt, und wobei der Sensor so angeordnet ist, dass er die Änderung des Magnetfeldes wahrnimmt und das mindestens eine Eingangssignal an die Steuereinheit sendet; und wobei, wenn die Spitze verschoben wird, eine Verschiebung der Spitze in einer dritten Richtung (DR3) über einen dritten Abstand (D3) eine entsprechende Verschiebung des Magneten in der dritten Richtung erzeugt, die eine Änderung des Magnetfeldes erzeugt, wobei der Sensor so angeordnet ist, dass er die Änderung des Magnetfeldes wahrnimmt und das mindestens eine Eingangssignal an die Steuereinheit sendet.

4. Mundpflegegerät nach Anspruch 1, wobei die Steuereinheit einen Prozessor (157) und einen Speicher (160) umfasst, wobei der Speicher so angeordnet ist, dass er eine Vielzahl von nicht-transitorischen, computerlesbaren Anweisungen (169) und das mindestens eine Eingangssignal vom Sensor speichert, wobei der Prozessor so angeordnet ist, dass er die Vielzahl von nicht-transitorischen, computerlesbaren Anweisungen ausführt, um die Statoranordnung als Reaktion auf das mindestens eine Eingangssignal zwischen dem ersten Modus und dem zweiten Modus umzuschalten.

5. Mundpflegegerät nach Anspruch 4, wobei die Steuereinheit so angeordnet ist, dass sie eine Vielzahl von Eingangssignalen (175) empfängt, wobei die Vielzahl von Eingangssignalen einer Vielzahl von Umschaltungen der Spitze von der ersten Position in die zweite Position entspricht.

6. Mundpflegegerät nach Anspruch 5, wobei der Speicher der Steuereinheit ferner so angeordnet ist, dass er eine Datenbank (190) mit einer Vielzahl von Signalsequenzen (193) und der Vielzahl von Eingangssignalen speichert, und der Prozessor so angeordnet ist, dass er eine gespeicherte Sequenz (196), die der Vielzahl von Eingangssignalen entspricht, mit der Vielzahl von Signalsequenzen in der Datenbank vergleicht.

## Revendications

1. Appareil de soins buccodentaires (100) comprenant:
un boîtier (103) comprenant:
une pointe (106);
un corps (115) fixé de manière pivotante ou en translation à la pointe et sensiblement parallèle à un axe imaginaire (A), le corps ayant un capteur (124); et,
une unité de commande (154) agencée pour recevoir au moins un signal d'entrée (172) provenant du capteur situé à l'intérieur du corps, l'unité de commande étant agencée pour faire passer l'appareil de soins bucco-dentaires d'un premier mode (184) à un deuxième mode (187) en réponse à l'au moins un signal d'entrée provenant du capteur, l'au moins un signal d'entrée correspondant au pivotement ou à la translation de la pointe d'une première position (P1) à une deuxième position (P2);
**caractérisé en ce que**
l'unité de commande comprend en outre un accéléromètre (163) ou un gyroscope (166) agencé pour détecter une première orientation (OR1) de l'appareil de soins buccodentaires et une deuxième orientation (OR2) de l'appareil de soins buccodentaires, où la première orientation correspond au corps de l'appareil de soins buccodentaires étant sensiblement parallèle à l'axe imaginaire et la deuxième orientation correspond au corps de l'appareil de soins buccodentaires étant sensiblement orthogonal à l'axe imaginaire; et
où l'unité de commande est configurée pour empêcher le passage du premier mode au deuxième mode lorsque l'appareil de soins buccodentaires est dans la deuxième orientation, et où l'unité de commande est configurée pour allumer ou éteindre l'appareil de soins buccodentaires en réponse à l'au moins un signal d'entrée lorsque l'appareil de soins buccodentaires est dans la deuxième orientation.

2. Appareil de soins buccodentaires selon la revendication 1, dans lequel la pointe comprend:
une pièce (109) agencée de façon fonctionnelle pour entrer en contact avec un utilisateur (U); et,
un premier alésage traversant partiel (112) disposé sensiblement parallèlement à l'axe imaginaire.

3. Appareil de soins buccodentaires selon la revendication 2, dans lequel le capteur et l'unité de commande sont agencés dans une cavité (118) à l'intérieur du corps, la cavité comprenant en outre:
une source d'alimentation (127);
un ensemble de stator (133) agencé pour générer un champ magnétique (145) en réponse à un signal électrique (142) provenant de la source d'alimentation;
un aimant (151) agencé à l'intérieur du champ magnétique de l'ensemble de stator;
un arbre d'entraînement (148) couplé à l'aimant et positionné à l'intérieur du trou traversant partiel de la pointe;
où, lorsque la pointe pivote, le déplacement de la pointe dans une première direction (DR1) sur une première distance (D1) crée un déplacement correspondant de l'aimant dans une deuxième direction (DR2), opposée à la première direction, sur une deuxième distance (D2) générant un changement dans le champ magnétique et où le capteur est agencé pour percevoir le changement dans le champ magnétique et envoyer l'au moins un signal d'entrée à l'unité de commande; et où, lorsque la pointe est tournée, un déplacement de la pointe dans une troisième direction (DR3) sur une troisième distance (D3) crée un déplacement correspondant de l'aimant dans la troisième direction générant un changement du champ magnétique où le capteur est agencé pour percevoir le changement dans le champ magnétique et envoyer l'au moins un signal d'entrée à l'unité de commande.

4. Appareil de soins buccodentaires selon la revendication 1, dans lequel l'unité de commande comprend un processeur (157) et une mémoire (160), la mémoire étant agencée pour stocker une pluralité d'instructions non transitoires lisibles par ordinateur (169) et l'au moins un signal d'entrée provenant du capteur, le processeur étant agencé pour exécuter la pluralité d'instructions non transitoires lisibles par ordinateur pour commuter l'ensemble de stator entre le premier mode et le deuxième mode en réponse à l'au moins un signal d'entrée.

5. Appareil de soins buccodentaires selon la revendication 4, dans lequel l'unité de commande est agencée pour recevoir une pluralité de signaux d'entrée (175), où la pluralité de signaux d'entrée correspond à une pluralité de commutateurs de la pointe de la première position à la deuxième position.

6. Appareil de soins bucco-dentaires selon la revendication 5, dans lequel la mémoire de l'unité de commande est en outre agencée pour stocker une base de données (190) d'une pluralité de séquences de signaux (193), et la pluralité de signaux d'entrée, et le processeur est agencé pour comparer une séquence stockée (196) correspondant à la pluralité de signaux d'entrée avec la pluralité de séquences de signaux dans la base de données.
